# EUROPEAN PATENT APPLICATION

(11) **EP 2 062 755 A2**
(43) Date of publication of application: **27.05.2009**
(21) Application number: 08168018.3
(22) Date of filing: 31.10.2008
(51) Int. Cl.: B60G 11/52

(54) **Damping device particularly for vehicle suspensions**

(30) Priority: 20.11.2007 IT BO20070765
(71) Applicant: Manucci, Roberto, 47016 Predappio FC (IT)
(72) Inventor: Manucci, Roberto, 47016 Predappio FC (IT)
(74) Representative: Modiano, Micaela Nadia

(57) **Abstract**

A damping device (1), particularly for vehicle suspensions, the vehicles being of the type that comprises a chassis (3) to which at least one fork (4), adapted to accommodate rotatably a wheel (5), is articulated. At least one shock-absorbing element (6) with viscoelastic behavior is interposed between the chassis (3) and the fork (4). The damping device (1) comprises a block (9) made of a material that can be deformed, substantially in an elastic manner, and is interposed between the chassis (3) and the fork (4), in a configuration for intercepting the stroke of the fork (4) with respect to the chassis (3), if the stroke of the fork exceeds a limit value that is preset by the constructive characteristics of the vehicle.

## Description

The present invention relates to a damping device, particularly for vehicle suspensions.

Currently, in order to meet vehicle comfort and roadholding requirements on the part of consumers, manufacturers are paying increasing attention to the effectiveness of suspensions, i.e., to the set of all the components by means of which the chassis is connected to the wheels.

Without them, the vehicle would be affected by intense forces due to the roughness and unevenness of the terrain over which it moves, travel comfort would thus be nonexistent, and in some cases the wheels would even leave from the ground, eliminating all roadholding.

Therefore, the suspensions absorb the unevenness of the terrain, and in addition to isolating the driver from the forces transmitted by the wheels, they make the wheels remain always in contact with the terrain, avoiding rebounding due to the roughness of the terrain.

Typically, suspensions are composed of an elastic element, which controls the movement of the chassis with respect to the tire (for example a spring), and a damping element (the shock absorber).

The elastic element is capable of absorbing the roughness of the terrain, thus sparing the driver from unpleasant oscillations, while the shock absorber is designed to dampen the subsequent elastic reactions caused by its compression.

The effectiveness of suspensions is particularly important in a particular category of vehicles: off-road motorcycles, designed specifically for rough and/or unpaved tracks and often divided into motocross vehicles, enduro vehicles and trial vehicles, each having its own specific characteristics.

In greater detail, motocross bikes require very sturdy suspensions with a long stroke, adapted to absorb most of the roughness and the jumps to which the motorcycle is subjected.

Motorcycles are known which have a suspension constituted by a spring that is subjected to forces axially, and is connected to the tire at one of its ends and to the chassis at the other end. The shock absorber is arranged coaxially within the turns of the spring and is constituted by a stem that has a piston at one of its ends. The piston separates two chambers inside a cylinder; when the stem moves, the oil contained in the two chambers must move from one chamber to the other, dissipating energy because it is forced to pass through appropriately provided specific valves (typically laminas) fitted on the piston.

However, this solution is not free from drawbacks: as a consequence of passage over a substantial irregularity of the terrain (which is rather common in the tracks usually followed by motocross bikes), for example such that the spring, during compression, closes its turns completely, the consequent return of elastic energy is too violent for the shock absorber, which is unable to dampen its effects except partially.

The spring thus reaches the maximum possible extension, reaching the stroke limit too quickly; the consequent stop is thus too sudden and the sudden blocking of the saddle that arises from this is an inevitable cause of discomfort for the driver, who tends to be thrown off the saddle.

The aim of the present invention is to solve the above-mentioned drawbacks, by providing a damping device that is capable of slowing the motion of the shock-absorbing element and of the chassis connected thereto during the final portion of its stroke, in order to avoid sudden stops of said element against its stroke limit as a consequence of the stresses produced by passage over irregularities of the terrain.

Within this aim, an object of the invention is to provide a damping device that can be installed on already circulating vehicles without the need for an onerous preventive action (in terms of time and money) for installation and tuning at the workshop.

Another object of the invention is to provide a damping device that allows simple adjustments in order to achieve optimum yield as a function of the specific environmental conditions and of the weight and height characteristics of the driver.

Another object of the invention is to provide a damping device that ensures high reliability in operation.

Another object of the invention is to provide a damping device that can be obtained easily starting from commonly commercially available elements and materials.

Another object of the invention is to provide a damping device that has a low cost and is safe in application.

This aim and these and other objects, which will become better apparent hereinafter, are achieved by a damping device, particularly for vehicle suspensions, said vehicles being of the type that comprises a chassis to which at least one fork, adapted to accommodate rotatably a wheel, is articulated, at least one shock-absorbing element with viscoelastic behavior being interposed between the chassis and the fork, characterized in that it comprises a block made of a material that can be deformed, substantially in an elastic manner, and is adapted to be interposed between the chassis and the fork, in a configuration for intercepting the stroke of the fork with respect to the chassis, in case of a stroke of said fork that exceeds a limit value that is preset by the constructive characteristics of said vehicle.

Further characteristics and advantages of the invention will become better apparent from the following detailed description of a preferred but not exclusive embodiment of the damping device according to the invention, illustrated by way of non-limiting example in the accompanying drawings, wherein:

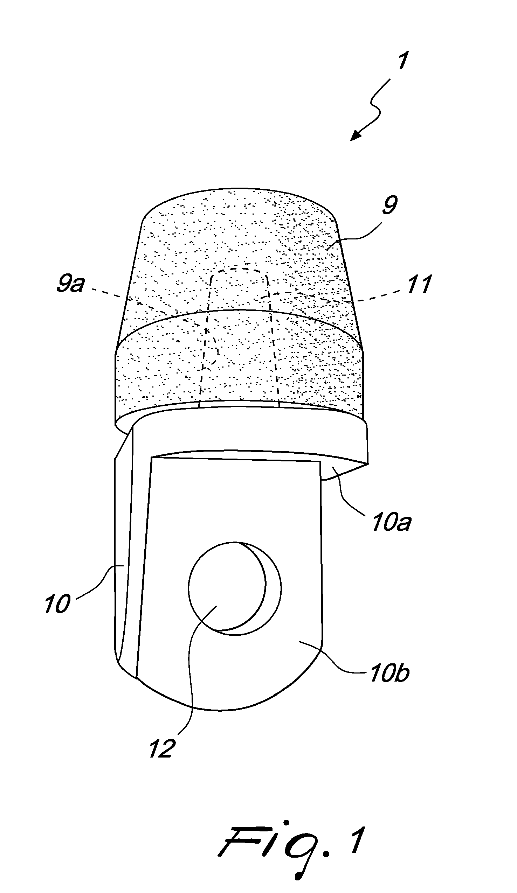

Figure 1 is a perspective view of the damping device according to the invention;

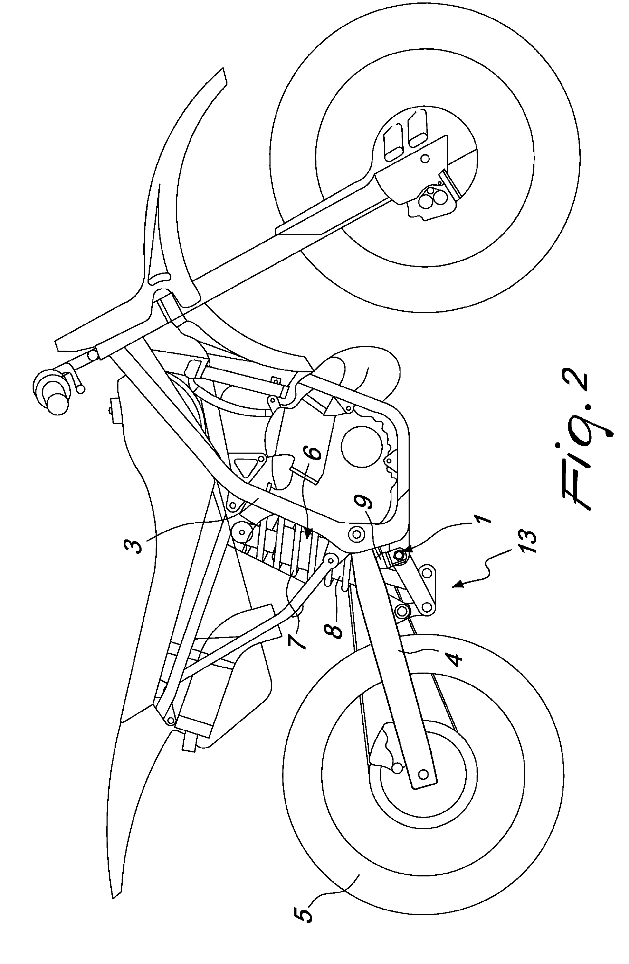

Figure 2 is a view of a possible application of the damping device according to the invention to a motocross bike, shown in a side elevation view;

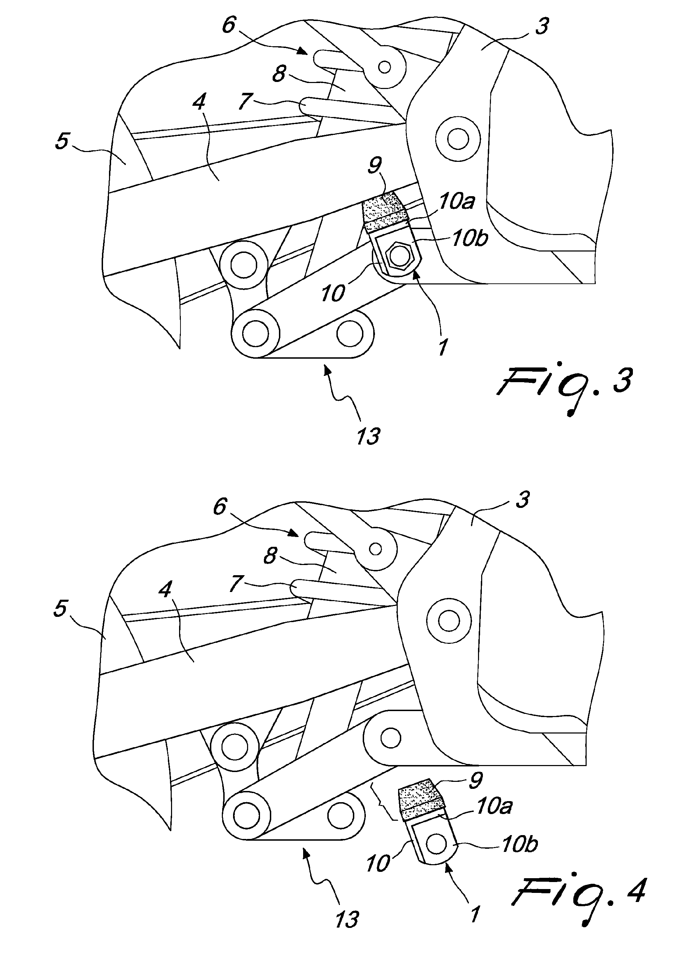

Figure 3 is an enlarged-scale view of a detail of Figure 2;
Figure 4 is an exploded view of the same detail of Figure 3;

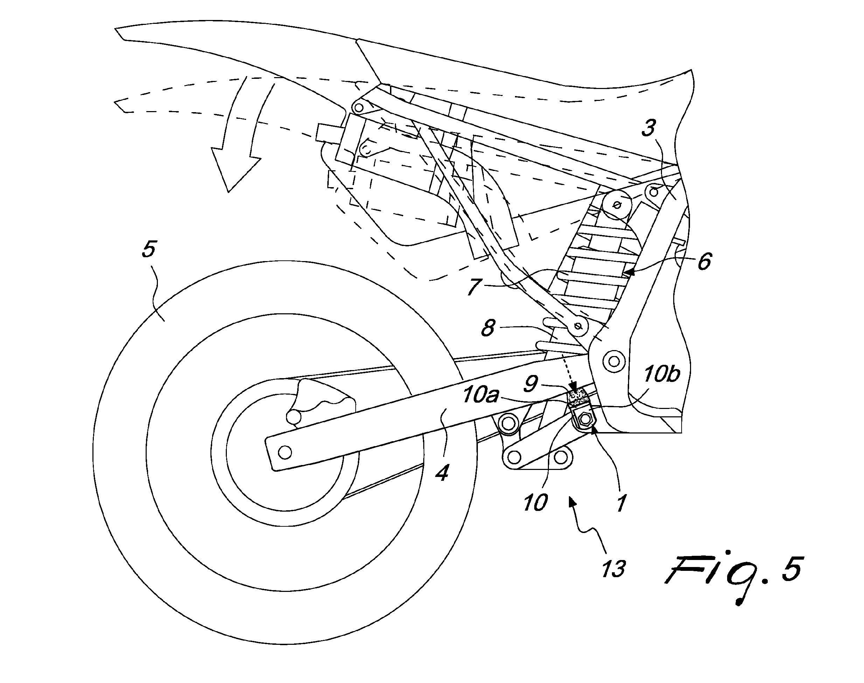

Figure 5 is a view of the same application of Figure 2, in which the mutual movement of the fork and of the chassis of the motocross bike is illustrated schematically.

With reference to the figures, a damping device according to the invention, generally designated by the reference numeral 1, can be fixed to a vehicle 2, which comprises a chassis 3 and at least one fork 4, which is suitable for rotatably accommodating a wheel 5.

In the present description, reference will be made constantly to vehicles 2 which are provided with forks 4 of the type with a double arm (i.e., substantially Y-shaped); the application of a device 1 according to the invention to vehicles 2 provided with single-arm forks 4 or other equivalent solutions (in the case of motor cycles, if applied to the rear wheel 5, they are commonly known as "swingarms"), is to be considered fully equivalent.

The vehicle 2 can be a road or off-road motorcycle (and the wheel 5 can be the rear one), particularly of the motocross type (as in the possible application of the device 1 shown in the accompanying figures), a supermotard or enduro motorcycle, be they intended for competitive use or for mere leisure. These are in fact vehicles 2 designed to undergo intense forces on their suspensions and are therefore particularly subject to the problems that the device 1 according to the invention seeks to solve.

It should be noted in any case that the particular constructive solution to which the present invention relates can be applied to any type of vehicle 2, as will become apparent from the description that follows. In particular, the device 1 according to the invention can be used in all those fields of application in which travel over rough paths is expected, as occurs for example for mountain bikes.

More specifically, in order to absorb the roughness of the terrain, a shock-absorbing element 6 of a known type, with viscoelastic behavior, is interposed between the chassis 3 and the fork 4, and in practice constitutes the core of the functional assembly designated by the generic term "suspension" of the vehicle 2.

The shock-absorbing element 6 comprises an elastic element 7, which can be an axially actuated spring, which is compressed as a consequence of the passage of the wheel 5 over an irregularity of the ground, and whose elastic reaction allows to restore the normal travel configuration. A known type of cylinder 8, arranged for example internally and coaxially to the spring, ensures damping of the subsequent oscillations of the spring, whose energy is dissipated in order to overcome resistances of the viscous type that are present inside the cylinder 8.

According to the invention, the damping device 1 comprises a block 9 made of a material that can be deformed in a substantially elastic manner and can be interposed between the chassis 3 and the fork 4, in order to intercept the stroke of the fork 4 with respect to the chassis 3 if such stroke is greater than a preset limit value that depends on the constructive characteristics of the vehicle 2.

In particular, the elastic material of which the block 9 is made can be at least partly of the type of natural rubber.

According to an alternative embodiment, the block 9 is instead made of a material that is at least partly of the type of synthetic rubber.

A future application of the device 1 according to the invention that resorts to composite or sintered materials, if future new uses require their specific mechanical characteristics, is further to be expected.

According to a constructive solution of particular practical interest, which however does not limit the application of the invention, the damping device 1 comprises a metal plate 10, which supports the block 9 and can engage either the chassis 3 or the fork 4 of the vehicle 2.

More particularly, the metal plate 10 is folded so as to form a first flat surface 10a, on which a body 11 is fixed, which in turn is coupled to a corresponding compartment 9a that is formed in the block 9, which for example has a substantially cylindrical shape.

The metal plate 10 further has a second flat surface 10b, on which there is a seat 12 for coupling to the chassis 3 or to the fork 4 of the vehicle 2.

Conveniently, the seat 12 can be coupled to an abutment, which is formed on either the chassis 3 or the fork 4, and faces and is proximate to a respective portion of the other between the chassis 3 and the fork 4, in order to intercept the stroke of the fork 4 with respect to the chassis 3 during the return of said fork.

In this manner, the block 9 in practice constitutes a new stroke limit for the fork 4, against which the latter stops, particularly during the expanding return stroke of the elastic element 7.

The material of which the block 9 is made has such an elastic deformability value as to avoid, proximate to the end of the return stroke of the fork 4, a sudden stop of the parts of the vehicle 2 that are connected to the shock-absorbing element 6 and in particular to the chassis 3 that supports the driver, thus facilitating his comfort and, with reference to the application of the device 1 to motorcycles, avoiding the risk of such driver being thrown off the saddle.

The metal plate 10, and in particular its seat 12, can engage an appropriate coupling element provided for this purpose on the vehicle 2, or more simply it is possible to utilize existing components of the vehicle 2 to which the plate 10 is coupled.

For example, the seat 12 formed on the second surface 10b can be fixed to an abutment formed on the chassis 3, so as to intercept a corresponding portion of the fork 4 during its return stroke.

Advantageously, according to the embodiment shown in the accompanying figures, the metal plate 10, and particularly its seat 12, can engage transmission means 13, which actually provide the connection between the chassis 3, the fork 4 and the shock-absorbing element 6 and are typically present on most commercially available motocross bikes.

In this manner, it is evident that the fitting of the damping device 1 according to the invention requires a few simple operations, which conveniently can be performed in a short time and do not require the intervention of specialized labor.

The operation of the damping device according to the invention is evident from what has been described and illustrated, and in particular it is clear that the use of a material that is capable of deforming elastically as a consequence of the force to which it is subjected, and with which the block 9 to be interposed between the chassis 3 and the fork 4 is to be made, allows to avoid the sudden impact that would otherwise occur between them when the stroke limit is reached, facilitating instead a "gentler" stop.

It is further evident that the great structural simplicity of the device 1 according to the invention, combined with small dimensions, make its assembly extremely simple and quick, and said assembly can further be performed by utilizing supporting elements, such as the transmission means 13, that are already present in commercially available motorcycles.

In practice it has been found that the damping device according to the invention fully achieves the intended aim and objects, since the elastic deformability of the block fitted along the stroke of the fork with respect to the chassis allows to slow down and "soften" the final portion of the stroke of the fork, which stops against the new stroke limit represented by such block.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

The damping device according to the invention can be designed for use on motorcycles or other vehicles suitable for road or off-road use, such as for example mountain bikes, quad bikes, motorized sleds and motor vehicles in general.

Moreover, it is noted that anything found to be already known during the patenting process is understood not to be claimed and to be the subject of a disclaimer.

In practice, the materials used, as well as the dimensions, may be any according to requirements and to the state of the art.

The disclosures in Italian Patent Application No. BO2007A000765 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A damping device (1), particularly for vehicle suspensions, said vehicles being of the type that comprises a chassis (3) to which at least one fork (4), adapted to accommodate rotatably a wheel (5), is articulated, at least one shock-absorbing element (6) with viscoelastic behavior being interposed between the chassis (3) and the fork (4), **characterized in that** it comprises a block (9) made of a material that can be deformed, substantially in an elastic manner, and is adapted to be interposed between the chassis (3) and the fork (4), in a configuration for intercepting the stroke of the fork (4) with respect to the chassis (3), in case of a stroke of said fork that exceeds a limit value that is preset by the constructive characteristics of said vehicle (2).

2. The damping device according to claim 1, **characterized in that** said elastic material that constitutes said block (9) is at least partly of the type of natural rubber.

3. The damping device according to claim 1, **characterized in that** said elastic material that constitutes said block (9) is at least partly of the type of synthetic rubber.

4. The damping device according to one or more of the preceding claims, **characterized in that** it comprises a metal plate (10) that supports said block (9), said metal plate (10) being engageable with either the chassis (3) or the fork (4) of the vehicle (2).

5. The damping device according to one or more of the preceding claims, **characterized in that** said metal plate (10) is folded so as to form a first flat surface (10a), on said first surface (10a) there being a body (11) that can be rigidly coupled to a corresponding compartment (9a) formed in said block (9).

6. The damping device according to one or more of the preceding claims, **characterized in that** said metal plate (10) has a second flat surface (10b), on said second flat surface (10b) there being a seat (12) for coupling to either the frame (3) or the fork (4) of the vehicle (2).

7. The damping device according to one or more of the preceding claims, **characterized in that** said seat (12) can be coupled to an abutment, formed on either the chassis (3) or the fork (4), which faces and lies proximate to a respective portion of the other between the chassis (3) and the fork (4), in order to intercept the stroke of the fork (4) with respect to the chassis (3) during the return of said fork.

8. The damping device according to one or more of the preceding claims, **characterized in that** said seat (12) formed on said second surface (10b) of said metal plate (10) is suitable for fixing on an abutment that is formed on the chassis (3), in order to intercept a corresponding portion of the fork (4) during its return stroke.

9. The damping device according to one or more of claims 1 to 7 and as an alternative to claim 8, **characterized in that** said seat (12) formed on said second surface (10b) of said metal plate (10) is suitable for fixing on transmission means (13), which are suitable for mutual articulation between the frame (3), the fork (4) and the shock-absorbing element (6), in order to intercept a corresponding portion of the fork (4) during its return stroke.
